# FASCICULE DE BREVET EUROPEEN

(11) **EP 2 649 112 B1**
(45) Date de publication et mention de la délivrance du brevet: **21.03.2018**
(21) Numéro de dépôt: 11794116.1
(22) Date de dépôt: 06.12.2011
(51) Int. Cl.: C08G 69/36, C08L 77/02, C08J 3/12, B29C 67/00

(54) **REALISATION D'ARTICLE PAR FUSION SELECTIVE DE COUCHES DE POUDRE DE POLYMERE**
HERSTELLUNG EINES ARTIKELS DURCH SELEKTIVE FUSION VON POLYMERPULVERSCHICHTEN
PRODUCTION OF AN ARTICLE BY SELECTIVE FUSION OF POLYMER POWDER LAYERS

(30) Priorité: 10.12.2010 FR 1060345
(43) Date de publication de la demande: 16.10.2013
(73) Titulaire: Rhodia Operations, 93306 Aubervilliers (FR)
(72) Inventeur: CORRIOL, Cécile, F-69003 Lyon (FR); LAHARY, Pierre-Yves, F-69006 Lyon (FR)
(74) Mandataire: Schuck, Alexander
(86) Numéro de dépôt international: PCT/EP2011/071928
(87) Numéro de publication internationale: WO 2012/076528

(56) Documents cités:
- WO-A2-2010/063691

## Description

La présente invention concerne un procédé de fabrication d'articles par fusion sélective de couches de poudre de polymères, notamment le prototypage rapide par frittage en phase solide à l'aide d'un laser, d'une poudre à base de copolyamide de type 6 présentant une faible enthalpie de cristallisation froide. L'invention concerne aussi des articles obtenus par un tel procédé.

### ART ANTERIEUR

Le procédé de fabrication d'articles par fusion sélective de couches de poudre de polymères est un procédé qui permet d'obtenir des pièces de formes complexes sans outillage et sans usinage, à partir d'une image en trois dimensions de l'article à réaliser, en frittant des couches superposées de poudres polymériques, notamment à l'aide d'un laser. On utilise généralement pour ce faire des polymères thermoplastiques. Des généralités sur le prototypage rapide par frittage laser sont mentionnées dans les brevets US6136948 et les demandes WO96/06881, US20040138363. La technologie d'agglomération de poudres de polyamide sous un rayonnement électromagnétique sert à fabriquer des objets en trois dimensions pour diverses applications, notamment des prototypes et des modèles.

Le document WO 2010/063691 divulgue un procédé de frittage laser à l'aide d'une poudre à base de polymères thermoplastiques présentant des caractéristiques de granulométrie et de distribution particulières. Les polyamides, et plus particulièrement le polyamide 6 et ses copolymères, sont particulièrement préférés en tant que polymères thermoplastiques.

Dans un procédé de fabrication d'articles par fusion sélective de couches de poudre de polyamide, on dépose une couche de poudre de polyamide sur une plaque horizontale maintenue dans une enceinte chauffée à une température située entre la température de cristallisation Tc et la température de fusion Tf de la poudre de polyamide. Un rayonnement électromagnétique, notamment un laser, agglomère alors des particules de poudre de la couche de poudre à l'aide d'un ordinateur ayant en mémoire la forme de l'objet et restituant cette dernière sous forme de tranches. On dépose ensuite une nouvelle couche de poudre et le laser agglomère des particules de poudre selon une géométrie correspondant à cette nouvelle tranche de l'objet et ainsi de suite. La procédure est répétée jusqu'à ce que l'on ait fabriqué tout l'objet.

Dans le but de réaliser des articles en polyamide avec de tels procédés, il est connu d'utiliser des poudres à base de polyamide 11 ou 12 présentant une faible granulométrie d50, notamment comprise entre 50 et 150 µm. Ces poudres présentent des particules ayant des tailles similaires et ainsi une distribution des tailles de particules étroite.

Il est connu d'utiliser des polyamides de type 11 et 12 présentant un écart |Tf-Tc| le plus important possible pour bénéficier d'une large fenêtre de travail. Cette fenêtre de travail est définie par sa limite supérieure de température et sa limite inférieure de température. La limite supérieure de la fenêtre de travail correspond à la température de fusion Tf à laquelle se fait l'agglomération ou le caking. La limite inférieure de la fenêtre de travail correspond à la température de cristallisation Tc à laquelle se forme une distorsion ou déformation ou « curling ». Cette fenêtre de travail du dispositif est un paramètre important pour la fabrication d'articles à base de polyamides 11 et 12 que l'on peut trouver sur le marché actuellement.

Toutefois, ce paramètre à contrôler n'est pas le seul pour ce qui concerne les polyamides de type 6 pour obtenir des articles convenables réalisés par les procédés de fabrication par fusion sélective de couches de poudre. En effet, une fenêtre de travail |Tf-Tc| élevée n'empêche pas l'apparition de défauts de surface sur le lit de poudre lors de chaque apport d'une nouvelle couche de poudre pour ce qui concerne les polyamides de type 6, phénomène peu ou pas observé classiquement sur les polyamides de type 11 et 12. Il n'y a d'ailleurs à ce jour aucune poudre à base de polyamide de type 6 sur le marché convenant parfaitement à la fabrication d'articles par ces procédés de fabrication par fusion sélective de couches de poudre.

### INVENTION

La demanderesse vient de découvrir qu'un autre paramètre important pour la réalisation d'articles par fusion sélective de couches de poudre de polyamides de type 6 réside dans le contrôle de l'enthalpie de la cristallisation froide de ces polyamides afin d'éviter la présence de fissures et/ou de mottes à la surface du lit de poudres lors de la fabrication d'articles.

Il apparait en effet qu'il est important que les polyamides convenables pour la réalisation d'articles par fusion sélective de couches de poudre présentent une faible enthalpie de cristallisation froide. Le phénomène de cristallisation froide est par ailleurs bien connu dans le domaine du polyamide et correspond à un processus exothermique issu du réarrangement des zones amorphes du matériau en zones cristallines. La cristallisation froide apparaît à une température inférieure à la température de fusion du polymère. Elle est mise en évidence par des mesures DSC (Differential Scanning Calorimetry) dans des conditions standards ou modulées et correspond à un pic exothermique apparaissant avant le pic endothermique de la fusion. Dans les conditions standards de mesure DSC, l'exotherme de la cristallisation froide peut être masqué entièrement ou partiellement par les autres phénomènes, tels que la fusion par exemple. La DSC modulée en revanche permet de séparer les phénomènes réversibles des phénomènes non-réversibles par application d'un signal sinusoïdale en température. La DSC modulée permet effectivement de séparer le flux total de chaleur en ses composants thermodynamiques et cinétiques. Le phénomène de cristallisation froide apparaît alors en phénomène non-réversible (composant cinétique du signal total) et est alors séparé de la fusion.

La demanderesse vient de mettre au point un copolyamide de type 6 semi-aromatique et/ou semi-cycloaliphatique présentant une faible enthalpie et parfaitement apte aux procédés de réalisation d'articles par fusion sélective de couches de poudre.

La présente invention a ainsi pour premier objet l'utilisation d'une poudre comprenant au moins un copolyamide présentant une enthalpie de cristallisation froide inférieure à 80 J/g mesurée selon le protocole P, pour la fabrication d'un article façonné par fusion sélective de couches ;

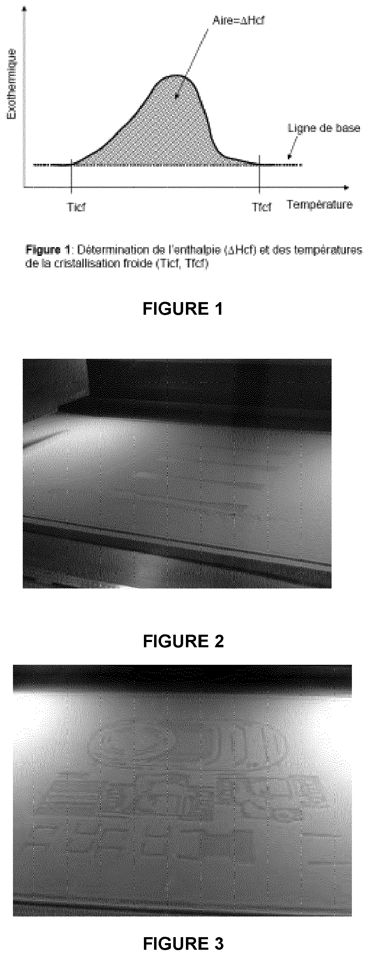

Le copolyamide comprend au moins 80 % molaire de monomère caprolactame ou l'aminoacide correspondant, sur le nombre de moles du mélange total de monomères et comonomères, et au moins un comonomère aromatique ou cycloaliphatique ; et
le procédé P consiste à mesurer l'enthalpie de cristallisation froide par analyse calorimétrique différentielle modulée dans laquelle :
a) on maintient d'abord le copolyamide à une température de 25°C pendant 5 minutes,
b) on procède ensuite à une montée modulée en température à une vitesse de 3°C/min jusqu'à 250°C avec une amplitude sinusoïdale de 0,48°C et une période d'1 minute et on enregistre le signal.
c) on mesure l'aire du pic exothermique ΔHcf correspondant à l'enthalpie de cristallisation froide du copolyamide, comme observé sur la Figure 1, notamment à l'aide d'un logiciel de traitement, caractérisée en ce que le copolyamide comprend un mélange d'un comonomère aromatique et d'un comonomère cycloaliphatique.

On préfère notamment utiliser un copolyamide présentant une enthalpie de cristallisation froide inférieure à 70 J/g mesurée selon le protocole P, plus préférentiellement inférieure à 60 J/g.

La présente invention concerne également un procédé de fabrication d'un article façonné par fusion sélective de couches, notamment par prototypage rapide utilisant un laser, utilisant une poudre telle que définie précédemment. L'invention concerne aussi un article façonné par fusion sélective de couches tel que défini précédemment.

On entend par copolyamide au sens de l'invention un composé obtenu par polymérisation d'au moins un monomère constitutif du polyamide et au moins un ou plusieurs comonomères. Les copolyamides de la présente invention sont préférentiellement semi-cristallins.

On entend par comonomère, également appelé comonomère minoritaire, un composé différent du monomère constitutif du polyamide et capable de se lier de manière covalente aux monomères constitutifs du polyamide, notamment par des liaisons amides, esters, ou imides, pour former un copolyamide.

Les comonomères aromatique et/ou cycloaliphatique de l'invention présentent préférentiellement au moins une fonction choisie dans le groupe constituée par :
- une fonction amine Am, notamment capable de former une liaison amide avec une fonction acide carboxylique du monomère constitutif du polyamide ;
- une fonction acide carboxylique Ac, notamment capable de former une liaison amide avec une fonction amine du monomère constitutif du polyamide ;
- une fonction alcool OH, notamment capable de former une liaison ester avec une fonction acide carboxylique du monomère constitutif du polyamide ; et
- une fonction diacide carboxylique DA, notamment capable de former une liaison imide avec une fonction amine du monomère constitutif du polyamide. Cette fonction diacide carboxylique peut comporter les fonctions acides carboxyliques géminales ou sur des atomes de carbone vicinaux.

La fonction amine Am est préférentiellement une fonction amine primaire ou son sel. La fonction acide carboxylique peut être sous forme salifiée ou non.

D'une manière préférée, le comonomère est représenté par la formule (I) suivante :

**R(Am)w-(Ac)x(OH)y(DA)z** (I)

dans laquelle:
- R est un radical hydrocarboné linéaire, branché, aliphatique, aromatique ou cycloaliphatique comprenant éventuellement de 1 à 20 atomes de carbone et comprenant éventuellement des hétéroatomes tels que N, O, ou P ;
- w est compris entre 0 et 4 ;
- x est compris entre 0 et 4 ;
- y est compris entre 0 et 4 ;
- z est compris entre 0 et 4 ; et
- w+x+y+z est supérieur ou égal à 1, notamment compris entre 1 et 5.

Les comonomères peuvent être choisis dans le groupe constitué par :
- les aminoacides ou acides aminocarboxyliques, par exemple comprenant de 3 à 18 atomes de carbone ; les lactames par exemple comprenant de 3 à 18 atomes de carbone ;
- les diamines pouvant être aliphatiques ou aromatiques ou cycloaliphatiques et comprenant préférentiellement de 3 à 18 atomes de carbone ;
- les diacides pouvant être aliphatiques ou aromatiques ou cycloaliphatiques comprenant préférentiellement de 3 à 18 atomes de carbone ;
- les composés monoacides ou monoamines généralement utilisés comme agent limiteurs de chaines du polyamide ;
- les hydroxyacides ou dérivés, par exemple comprenant préférentiellement de 3 à 18 atomes de carbone ;
- les lactones par exemple comprenant de 3 à 18 atomes de carbone,
- les diols pouvant être aliphatiques ou cycloaliphatiques et comprenant préférentiellement de 3 à 18 atomes de carbone ;
- les monomères comportant deux fonctions acide carboxylique permettant de former des fonctions imide, aliphatiques ou aromatiques ou cycloaliphatiques et comprenant de 3 à 18 atomes de carbone ;
- ou leurs mélanges.

On peut citer à titre d'exemple comme comonomères aliphatiques ceux choisis dans le groupe constitué par: l'acide amino-11-undécanoïque, l'acide amino-12-dodécanoïque, le lauryllactame, l'acide sébacique, l'acide dodécanedioïque, la tétraméthylène diamine, la triméthylhexaméthylène diamine, l'acide adipique, l'hexaméthylène diamine, l'acide oxalique, l'acide fumarique, l'acide maléique, l'acide méthyle glutarique, l'acide éthyle succinique, la métaxylylène diamine, la paraxylylène diamine, la méthyle-1 pentaméthylène diamine, les acides gras comme l'acide laurique, l'acide stéarique, l'acide palmitique, l'acide benzylique, l'acide 1-naphthylacétique, l'acide 3-(3,5-di-tert-butyl-4-hydroxyphenyl) propionique, la benzylamine, la laurylamine, la 1-naphthaleneméthylamine, l'octanol, le 2-éthyl hexanol, l'éthylène glycol, le 1,2-propane diol, le 1,3-propane diol, le 1-4-butanediol, l'éthanolamine, la propanolamine, l'acide lactique, l'acide glycolique, la caprolactone, la butyrolactone, la propionolactone , l'acide 3-hydroxy butyrique, l'acide 3-Hydroxy valerique, la 2,2,6,6-tétra-(β-carboxyéthyl)cyclohexanone, le diaminopropane - N,N,N',N' acide tétraacétique, l'acide malique, l'acide tartarique, l'acide citrique, l'acide aspartique, l'acide glutamique, et le dipentaerythritol.

Le copolyamide au sens de l'invention comprend ainsi au moins un comonomère, dont au moins un est un comonomère aromatique ou cycloaliphatique. Le copolyamide comprend un mélange d'un comonomère aromatique et d'un comonomère cycloaliphatique.

On entend par comonomère aromatique un comonomère comprenant au moins un cycle aromatique et éventuellement une ou plusieurs chaines hydrocarbonées, linéaires ou ramifiées. Le copolyamide selon l'invention peut comprendre au moins un comonomère minoritaire aromatique, tel que par exemple ceux choisis dans le groupe constitué par : l'acide téréphtalique, l'acide isophtalique, l'acide benzoïque, la phenylène diamine, l'acide 1 naphthoique, l'acide anthracene-9-carboxylique, l'aniline, la naphthylamine, l'acide 1,8-naphthalene dicarboxylique, l'acide 2,6-naphthalenedicarboxylique, l'acide 5-hydroxy isophthalique, l'acide 5-sulfo isophthalique, le 2,3-diaminonaphthalene, le 1,5-diaminonaphthalene, l'acide 4-amino benzoïque, l'acide 4-hydroxybenzoique, l'acide 1-Hydroxy 2-naphthoique, l'acide 3-hydroxy 2-naphthoique, l'acide 4,4'-diamino diphenylméthane, le 4-aminophenyl éther, l'acides trimesique, l'acide trimellitique, l'acide pyrromellitique, l'acide 3,4,9,10-perylenetetracarboxylique, l'acide amino-5 isophthalique, l'acide 3,5-diamino benzoique, l'hydroquinone, le resorcinol, le bisphenol A, le 4,4'-oxydiphénol, et l'anhydride tetrahydrophthalique.

On entend par comonomère cycloaliphatique un comonomère comprenant au moins un cycle aliphatique et éventuellement une ou plusieurs chaines hydrocarbonées, linéaires ou ramifiées. Le copolyamide selon l'invention peut comprendre au moins un comonomère minoritaire cycloaliphatique, tel que par exemple ceux choisis dans le groupe constitué par: l'isophorone diamine, le bis (3,5-dialkyl-4-aminocyclohexyl) methane, le bis(3,5-dialkyl-4-aminocyclohexyl)ethane, le bis (3,5-dialkyl-4-aminocyclo-hexyl) propane, le bis (3,5- dialkyl-4-aminocyclo-hexyl) butane, le bis-(3-méthyl-4-aminocyclohexyl)-méthane, le p-bis (aminocyclohexyl) methane et l'isopropylidenedi (cyclohexylamine), le dicarboxy-1,4 cyclohexane, le 4,4'- diamino- 3,3' dimethyldicyclohexymethane, le 1,4- diaminocyclohexane, l'acide hexahydroterephtalique, la 4-amino-2,2,6,6-tetramethylpiperidine (TAD), la piperazine, la N-(2-aminoethyl) piperazine, la N,N'-bis(2-aminoethyl) piperazine, la 1,2-diamino cyclohexane, N,N'-bis (2-aminoethyl) imidazolidone, la N-(2-hydroxyethyl) piperazine, l'isosorbide, l'isomannide, le 1,4 cyclohexanediol, la N,N'-bis (2-hydroxyethyl) imidazolidone, l'acide 4-amino 1-cyclohexane carboxylique, et l'acide trans-1,2-diaminocyclohexane-N,N,N',N'-tétra acétique.

Le copolyamide peut également être un polymère comprenant de telles chaînes macromoléculaires étoiles, tels que ceux décrits dans les documents FR2743077, FR2779730, US5959069, EP632703, EP682057 et EP832149. Ces composés sont connus pour présenter une fluidité améliorée par rapport à des polyamides linéaires de même masse moléculaire.

On préfère notamment les copolyamides comprenant en tant que comonomères minoritaires un mélange de diamine cycloaliphatique et de diacide aromatique.

A titre d'exemple de copolyamides selon l'invention on peut notamment citer :
- un copolyamide de type 6 comprenant 4,7 % molaire d'un mélange d'acide téréphtalique et d'une diamine, notamment l'isophoronediamine;
- un copolyamide de type 6 comprenant 0,37 % molaire d'un mélange d'acide isophtalique et d'une diamine, notamment l'isophoronediamine;
- un copolyamide de type 6 comprenant 2 % molaire d'un mélange d'acide téréphtalique et d'hexaméthylène diamine;
- un copolyamide de type 6 comprenant 13 % molaire d'un mélange d'acide isophtalique et d'hexaméthylène diamine;
- un copolyamide de type 6 comprenant 5 % molaire d'un mélange d'acide adipique et d'isophoronediamine; et
- un copolyamide de type 6 comprenant 2 % molaire d'un mélange d'acide sébacique et d'isophoronediamine.

Les copolyamides peuvent être fabriqués de manières conventionnelles par polymérisation, notamment continue ou discontinue.

Le protocole P peut être réalisé avec un appareil classique de DSC (Differencial Scanning Calorimetry). Une telle caractérisation DSC est mise en oeuvre de manière simple et reproductible et permet d'effectuer une analyse calorimétrique des copolyamides fournissant des informations qualitatives et quantitatives sur les transformations physiques et chimiques entrainant des échanges de chaleur endothermiques ou exothermiques, ou des variations de capacité calorifique.

Il est parfaitement possible de mettre en évidence des copolyamides de type 6 de la présente invention présentant une enthalpie de cristallisation froide inférieure à 80 J/g mesurée selon le protocole P en utilisant différents comonomères aromatiques et/ou cycloaliphatique et en effectuant ensuite une étude calorimétrique desdits copolyamides, notamment à base d'une série d'essais classiques et de routine pour mettre en oeuvre le protocole P.

Le protocole P est préférentiellement celui décrit ci-dessous comprenant 4 étapes :
1. Mise en service de l'appareil
   - Appareil utilisé: Q2000, TA instruments.
   - Mettre l'appareil sous tension et laisser équilibrer pendant au moins 30 min.
   - Etalonner l'appareil suivant les recommandations du fabricant de l'appareil.
   - L'azote utilisé est de qualité analytique. Il sera utilisé pour toutes les mesures, conformément aux recommandations du fabricant de l'appareil.
2. Mise de l'échantillon dans le creuset et manipulation des creusets
   - Peser deux creusets avec leur couvercle: un premier creuset dans lequel sera déposé l'échantillon et un deuxième creuset qui servira de référence.
   - Déposer entre 2 et 5g de matière dans le premier creuset. La précision de la pesée doit être de ± 0,1 mg.
   - Fermer les deux creusets avec leur couvercle à l'aide d'une sertisseuse.
   - Vérifier que l'extérieur des deux creusets est propre.
   - Mettre en place les creusets dans les cellules du calorimètre à l'aide des pinces.
   - Fermer le couvercle du porte-échantillon et le couvercle de la cellule contenant la référence.
3. Mesure de l'enthalpie de cristallisation froide par analyses calorimétrique différentielle modulée
   - Paramétrer la modulation de la montée et descente en température:
      - Amplitude sinusoïdale: 0,48°C
      - Période: 1 min
   - Procéder à une première isotherme de 5 minutes à 25°C pour stabiliser la modulation
   - Procéder à une rampe en températures, à une vitesse de 3°C/min jusqu'à 250°C.
   - Procéder à un cycle de refroidissement, à une vitesse de 3°C/min jusqu'à 25°C et enregistrer les résultats.
   - Ouvrir le porte-échantillons. Sortir le creuset contenant l'échantillon et vérifier qu'il n'a pas subi de déformation et/ou détérioration. Si tel est le cas, rejeter la mesure et procéder à une deuxième mesure.
4. Détermination de l'enthalpie et de la largeur du pic de cristallisation froide Dans le logiciel de traitement des données "TA Universal Analysis 2000":
   - Afficher le pic correspondant à la première montée en températures et aux phénomènes non-réversibles ("non-reversing heat flow"). Le pic exothermique qui apparaît correspond à la cristallisation froide du matériau.
   - Construire la ligne de base du pic qui relie les deux points au niveau desquels le pic "décolle" de la ligne de base (voir **FIGURE 1**).
   - Mesurer:
      - La température initiale de la cristallisation froide (Ticf)
      - La température finale de la cristallisation froide (Tfcf)
   - L'aire de la zone comprise entre le sommet du pic et la ligne de base telle que construite comme décrite ci-dessus:
      - La largeur du pic de cristallisation froide est donnée par: Tfcf - Ticf (en °C).
      - L'enthalpie de la cristallisation froide ΔHcf en joule/gramme est donnée directement par le logiciel de traitement des données à partir de l'aire A calculée comme sur la **FIGURE 1****.**

On entend par poudre un assemblage de particules de polyamide obtenu selon divers procédés possibles. La poudre selon l'invention peut être obtenue de diverses manières connues de l'homme du métier en fonction des matériaux utilisés, tel que par broyage, cryobroyage, par voie de polymérisation, ou par voie précipitation. On peut notamment citer par exemple les documents EP1797141 et WO2007/115977 et WO2010/063691.

Ladite poudre peut notamment être fabriqué par :
a) mélange en fondu d'un copolyamide avec un composé A constitué par un matériau polymérique comprenant au moins une partie de sa structure compatible avec ledit copolyamide et au moins une partie de sa structure non compatible et insoluble dans ledit copolyamide, pour obtenir une dispersion de particules discrètes de copolyamide ;
b) refroidir ledit mélange à une température inférieure à la température de ramollissement du copolyamide ; et
c) traiter ledit mélange refroidi pour provoquer le délitement des particules de copolyamide.

La formation du mélange est notamment obtenue par fusion du copolyamide et addition du composé A sous forme solide ou fondu et application d'une énergie de mélange pour obtenir la formation des particules discrètes de copolyamide dispersées dans une phase avantageusement continue formée par le composé A. Ce mélange peut également être obtenu par mélange à l'état solide de particules dudit copolyamide et des particules dudit additif A, et fusion du mélange de particules avec application sur le mélange fondu d'une énergie de mélange pour obtenir la formation de particules discrètes de copolyamides dispersées dans une phase avantageusement continue formée par le composé A.

La poudre peut comprendre une teneur pondérale en copolyamide comprise entre 50 et 90 %, en particulier entre 70 et 80 %.

La concentration pondérale en additif A dans le mélange peut être comprise entre 10 % et 50 % avantageusement entre 20 % et 30 %. Nous rappelons que les bornes sont incluses dans les gammes présentées.

Selon un mode de réalisation ladite poudre est constituée de copolyamide et d'additif A, ainsi optionnelle que :
- au moins un, en particulier un, composé B tel que défini ci-dessous, et/ou
- un ou plusieurs additifs ou composés tels que définis ci-dessous.

Plus généralement, le mélange peut être obtenu par tout dispositif convenable tel que les mélangeurs à vis sans fin ou à agitateurs compatibles avec les conditions de température et de pression utilisées pour la mise en oeuvre des copolyamides. Selon un mode de réalisation préféré de l'invention, le mélange fondu est mis en forme avant l'étape de refroidissement, par exemple sous forme de filaments ou joncs. Cette mise en forme peut être avantageusement réalisée par un procédé d'extrusion à travers une filière. Selon un mode de réalisation préféré de l'invention, notamment quand le mélange fondu est mis en forme, ce mélange fondu est préférentiellement réalisé dans une extrudeuse alimentant la filière d'extrusion.

Le refroidissement du mélange fondu peut être réalisé par tout moyen approprié. Parmi ceux-ci, le refroidissement pneumatique ou le trempage dans un liquide sont préférés.

L'étape de récupération de la poudre de copolyamide consiste avantageusement, en un traitement de délitement des particules discrètes de copolyamide. Ce délitement peut être obtenu par application d'une force de cisaillement sur le mélange refroidi. Le délitement des particules de copolyamide peut être aussi obtenu par trempe du mélange fondu refroidi dans un liquide, non solvant du polymère thermoplastique et avantageusement solvant de l'additif A.

L'additif A est avantageusement, un polymère du type bloc, séquencé, peigne, hyperbranché ou étoile. Ainsi, la structure compatible avec le polyamide forme un bloc, une séquence, le squelette ou les dents du peigne, le coeur ou les branches du polymère étoile ou de l'hyperbranché. Selon un mode de réalisation préféré de l'invention, la structure compatible de l'additif A comprend des fonctions chimiquement identiques à celles du copolyamide. On utilise préférentiellement comme additif A les composés choisis dans le groupe comprenant : les copolymères bloc d'oxyde d'éthylène et d'oxyde de propylène (Pluronic® et Synperonic®), et les polyalkylènes amines (Jeffamine®).

La composition, outre le copolyamide et l'additif A, peut comprendre d'autres composés.

L'additif A peut être utilisé en combinaison avec un composé B qui est insoluble et non compatible avec le copolyamide. Avantageusement ce composé B présente une structure chimique compatible avec au moins une partie de la structure du composé A, notamment la partie de structure non compatible avec le copolyamide. Comme exemple de composés B convenables pour l'invention, on peut citer les composés appartenant aux familles des polysaccharides, polyoxyalkylènegycols, polyoléfines. Le composé B peut être ajouté de manière séparée du composé A ou sous forme de mélange avec au moins une partie du composé A.

Il peut également être pré mélangé avec le polymère thermoplastique.

Ce procédé permet l'obtention de particules à géométrie contrôlée, notamment en ajustant l'agitation lors de l'étape a), la nature des composés A et/ou B, la température et la concentration des différents composants du mélange.

La poudre selon l'invention peut notamment présenter une ou plusieurs des caractéristiques suivantes :
- une distribution granulométrique des particules d50 comprise entre 20 et 100 µm, préférentiellement entre 30 et 70 µm, et répondant également à la relation suivante : (d90-d10)/d50 comprise entre 0,85-1,3, préférentiellement 0,9-1,2 ;
- un facteur de sphéricité compris entre 0,8 et 1, préférentiellement entre 0,85 et 1 ;
- une porosité intra-particulaire inférieure à 0,05 ml/g, préférentiellement inférieure à 0,02 ml/g, notamment pour des tailles de pores supérieures ou égales à 0,01 µm.

La distribution granulométrique des particules d50, le facteur de sphéricité, et la porosité intra-particulaire sont notamment définis dans la demande de brevet WO2010/063691.

Les compositions utilisées selon l'invention, les poudre et/ou les articles obtenus, peuvent contenir un ou plusieurs additifs ou composés choisis dans le groupe comprenant les matifiants, les stabilisants thermiques, les stabilisants lumière, les pigments, les colorants, les charges de renfort, tels que des fibres de verre ou les fibres minérales, les billes de verre et fibres de carbones, les nucléants, et les agents de renfort du choc tels que des élastomères, les divers métaux et les agents anti-mottants tels que la silice.

La fabrication par fusion sélective de couches est un procédé de fabrication d'articles consistant à déposer des couches de matériaux sous forme de poudre, à fondre de manière sélective une partie ou un domaine d'une couche, et de venir déposer une nouvelle couche de poudre et de fondre de nouveau une partie de cette couche et ainsi de suite de manière à obtenir l'objet désiré. La sélectivité de la partie de la couche à fondre est obtenue par exemple grâce à l'utilisation d'absorbeurs, d'inhibiteurs, de masques, ou à travers l'apport d'énergie focalisée, comme par exemple un rayonnement électromagnétique tel qu'un rayon laser.

On préfère notamment le frittage par additivation de couches, particulièrement le prototypage rapide par frittage à l'aide d'un laser.

Le prototypage rapide est un procédé qui permet d'obtenir des pièces de formes complexes sans outillage et sans usinage, à partir d'une image en trois dimensions de l'article à réaliser, en frittant des couches superposées de poudres à l'aide d'un laser. Des généralités sur le prototypage rapide par frittage laser sont mentionnées dans les brevets US6136948 et les demandes WO96/06881, US20040138363.

Les machines permettant la réalisation de ces procédés sont composées d'une chambre de construction sur un piston de fabrication, entourée à gauche et à droite par deux pistons fournissant la poudre, d'un laser, et d'un moyen pour étaler la poudre, tel qu'un rouleau. La chambre est généralement maintenue à une température constante pour éviter les déformations.

A titre d'exemple, la poudre est d'abord étalée en couche uniforme sur toute la chambre, le laser trace alors la section 2D sur la surface de la poudre, la frittant ainsi. Des caches peuvent être également utilisés. Le piston de fabrication descend de l'épaisseur d'une strate tandis qu'un des pistons d'approvisionnement en poudre monte. Une nouvelle couche de poudre est étalée sur toute la surface et le processus se répète jusqu'à ce que la pièce soit terminée. La pièce doit ensuite être retirée précautionneusement de la machine et nettoyée de la poudre non frittée qui l'entoure. Il existe d'autres machines ou la poudre n'arrive pas par le bas grâce à des piston, mais par le haut. Cette méthode permet de gagner du temps car on n'est alors pas obligé d'arrêter la fabrication des pièces pour réapprovisionner la machine en poudre.

D'autres procédés de fabrication par addition de couches tels que ceux décrits dans les brevets WO 01/38061 et EP1015214 sont aussi appropriés. Ces deux procédés utilisent un chauffage infra rouge pour fondre la poudre. La sélectivité des parties fondues est obtenue dans le cas du premier procédé grâce à l'utilisation d'inhibiteurs, dans le cas du second procédé grâce à l'utilisation d'un masque. Un autre procédé est décrit dans la demande DE10311438. Dans ce procédé, l'énergie pour fondre le polymère est apportée par un générateur de micro-ondes et la sélectivité est obtenue par l'utilisation d'un "suscepteur".

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

Les matières utilisées sont les suivantes:
- Copolyamide de type 6 comprenant 4,7 % molaire d'un mélange de 50 % en poids d'acide téréphtalique et de 50 % en poids d'isophoronediamine ; de viscosité relative 130 mg/L dans l'acide formique. Ce polyamide présente une enthalpie de cristallisation froide selon le protocole P de 58 J/g. La poudre obtenue présente une distribution D50 de 48,5 µm et une dispersion granulométrique ((D90-D10)/D50) de 1,2.
- Homopolyamide K122, commercialisé par DSM, de viscosité relative 124 cm³/g selon les normes ISO 307, 1157, 1628. Cet homopolyamide 6 présente une enthalpie de cristallisation froide selon le protocole P de 98 J/g. La poudre obtenue présente une distribution D50 de 44,8 µm et une dispersion granulométrique ((D90-D10)/D50) de 1,25.

Ces poudres ont été mélangées de façon homogène avec 0,2 % en poids de silice précipitée avant le passage dans la machine de prototypage rapide. Un stabilisateur thermique est ajouté aux joncs lavés lors du procédé de fabrication.

### Exemple 1 : fabrication d'un article par frittage laser

Les poudres sont frittées sur une machine de type prototypage laser commercialisée par 3DSystems. Les particules sont disposées dans deux bacs adjacents à la surface de travail et chauffées à une température de 150°C. Les particules sont amenées sur la surface de travail à l'aide d'un rouleau en couche de 100-150 microns. La surface de travail est chauffée à une température comprise entre 195 et 210°C. Un laser d'une puissante entre 39 et 46W apporte l'énergie complémentaire nécessaire au frittage des particules.

Une fois la première couche frittée, la surface de travail est abaissée et le rouleau dépose ensuite une deuxième couche de poudre sur la surface de travail et ainsi de suite jusqu'à obtention de l'article final.

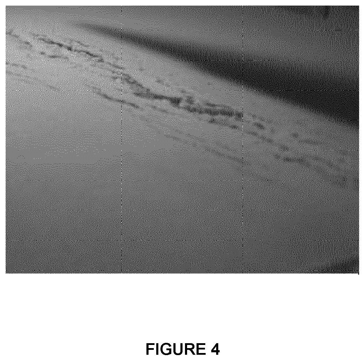

On observe alors la surface du lit de poudres et elle présente des fissures, des mottes et des croutes qui empêchent toute fabrication d'articles obtenus avec l'homopolyamide 6 présentant une enthalpie de cristallisation froide selon le protocole P de 98 J/g (voir **FIGURE 2**). Ceci est également représenté sur la **FIGURE 4** avec un grossissement plus important. A contrario, on n'observe aucun défaut d'aspect à la surface du lit de poudres selon la présente invention présentant une enthalpie de cristallisation froide selon le protocole P de 58 J/g (voir **FIGURE 3**).

## Revendications

1. Utilisation d'une poudre comprenant au moins un copolyamide présentant une enthalpie de cristallisation froide inférieure à 80 J/g mesurée selon le protocole P, pour la fabrication d'un article façonné par fusion sélective de couches ;
le copolyamide comprend au moins 80 % molaire de monomère caprolactame ou l'aminoacide correspondant, sur le nombre de moles du mélange total de monomères et comonomères, et au moins un comonomère aromatique ou cycloaliphatique; et
le procédé P consiste à mesurer l'enthalpie de cristallisation froide par analyse calorimétrique différentielle modulée dans laquelle :
a) on maintient d'abord le copolyamide à une température de 25°C pendant 5 minutes,
b) on procède ensuite à une montée modulée en température à une vitesse de 3°C/min jusqu'à 250°C avec une amplitude sinusoïdale de 0,48°C et une période d'1 minute et on enregistre le signal.
c) on mesure l'aire du pic exothermique ΔHcf correspondant à l'enthalpie de cristallisation froide du copolyamide ;
**caractérisée en ce que** le copolyamide comprend un mélange d'un comonomère aromatique et d'un comonomère cycloaliphatique.

2. Utilisation selon la revendication 1, **caractérisée en ce que** le comonomère aromatique ou cycloaliphatique du copolyamide présente au moins une fonction choisie dans le groupe constituée par :
- une fonction amine Am, notamment capable de former une liaison amide avec une fonction acide carboxylique du monomère constitutif du polyamide ;
- une fonction acide carboxylique Ac, notamment capable de former une liaison amide avec une fonction amine du monomère constitutif du polyamide ;
- une fonction alcool OH, notamment capable de former une liaison ester avec une fonction acide carboxylique du monomère constitutif du polyamide ; et
- une fonction diacide carboxylique DA, notamment capable de former une liaison imide avec une fonction amine du monomère constitutif du polyamide.

3. Utilisation selon la revendication 1 ou 2, **caractérisée en ce que** le comonomère aromatique est choisi dans le groupe constitué par : l'acide téréphtalique, l'acide isophtalique, l'acide benzoïque, la phenylène diamine, l'acide 1 naphthoique, l'acide anthracene-9-carboxylique, l'aniline, la naphthylamine, l'acide 1,8-naphthalene dicarboxylique, l'acide 2,6-naphthalenedicarboxylique, l'acide 5-hydroxy isophthalique, l'acide 5-sulfo isophthalique, le 2,3-diaminonaphthalene, le 1,5-diaminonaphthalene, l'acide 4-amino benzoïque, l'acide 4-hydroxybenzoique, l'acide 1-Hydroxy 2-naphthoique, l'acide 3-hydroxy 2-naphthoique, l'acide 4,4'-diamino diphenylméthane, le 4-aminophenyl éther, l'acides trimesique, l'acide trimellitique, l'acide pyrromellitique, l'acide 3,4,9,10-perylenetetracarboxylique, l'acide amino-5 isophthalique, l'acide 3,5-diamino benzoique, l'hydroquinone, le resorcinol, le bisphenol A, le 4,4'-oxydiphénol, et l'anhydride tetrahydrophthalique.

4. Utilisation selon la revendication 1 ou 2, **caractérisée en ce que** le comonomère cycloaliphatique est choisi dans le groupe constitué par :
l'isophorone diamine, le bis (3,5-dialkyl-4-aminocyclohexyl)methane, le bis(3,5-dialkyl-4-aminocyclohexyl)ethane, le bis (3,5-dialkyl-4-aminocyclohexyl)propane, le bis (3,5-dialkyl-4-aminocyclo-hexyl)butane, le bis-(3-méthyl-4-aminocyclohexyl)-méthane, le p-bis(aminocyclohexyl)methane et l'isopropylidenedi(cyclohexylamine), le dicarboxy-1,4 cyclohexane, le 4,4'-diamino- 3,3' dimethyldicyclohexymethane, le 1,4-diaminocyclohexane, l'acide hexahydroterephtalique, la 4-amino-2,2,6,6-tetramethylpiperidine (TAD), la piperazine, la N-(2-aminoethyl) piperazine, la N,N'-bis(2-aminoethyl) piperazine, la 1,2-diamino cyclohexane, N,N'-bis (2-aminoethyl) imidazolidone, la N-(2-hydroxyethyl) piperazine, l'isosorbide, l'isomannide, le 1,4 cyclohexanediol, la N,N'-bis (2-hydroxyethyl) imidazolidone, l'acide 4-amino 1-cyclohexane carboxylique, et l'acide trans-1,2-diaminocyclohexane-N,N,N',N'-tétra acétique.

5. Utilisation selon l'une quelconque des revendications 1 à 4 **caractérisée en ce que** le poudre est fabriquée par
a) mélange en fondu du copolyamide avec un composé A constitué par un matériau polymérique comprenant au moins une partie de sa structure compatible avec ledit copolyamide et au moins une partie de sa structure non compatible et insoluble dans ledit copolyamide, pour obtenir une dispersion de particules discrètes de copolyamide ;
b) refroidir ledit mélange à une température inférieure à la température de ramollissement du copolyamide ; et
c) traiter ledit mélange refroidi pour provoquer le délitement des particules de copolyamide.

6. Utilisation selon la revendication 1 ou 2, **caractérisée en ce que** la poudre présente une ou plusieurs des caractéristiques suivantes :
- une distribution granulométrique des particules d50 comprise entre 20 et 100 µm, préférentiellement entre 30 et 70 µm, et répondant également à la relation suivante : (d90-d10)/d50 comprise entre 0,85-1,3, préférentiellement 0,9-1,2 ;
- un facteur de sphéricité compris entre 0,8 et 1, préférentiellement entre 0,85 et 1 ; et
- une porosité intra-particulaire inférieure à 0,05 ml/g, préférentiellement inférieure à 0,02 ml/g, notamment pour des tailles de pores supérieures ou égales à 0,01 µm.

7. Procédé de fabrication d'un article façonné par fusion sélective de couches mettant en oeuvre une poudre selon l'une quelconque des revendications précédentes.

8. Article façonné par fusion sélective de couches obtenu à partir d'une poudre selon l'une quelconque des revendications précédentes.

## Patentansprüche

1. Verwendung eines Pulvers, umfassend mindestens ein Copolyamid, das eine Kaltkristallisationsenthalpie unter 80 J/g, gemessen nach dem Protokoll P, aufweist, für die Herstellung eines Formartikels durch selektive Fusion von Schichten;
wobei das Copolyamid mindestens 80 Mol-% eines Caprolactam-Monomers oder die entsprechende Aminosäure über die Molanzahl des Gesamtgemisches von Monomeren und Comonomeren und mindestens ein aromatisches oder cycloaliphatisches Comonomer umfasst; und
wobei das Verfahren P darin besteht, die Kaltkristallisationsenthalpie durch modulierte kalorimetrische Differenzialanalyse zu messen, wobei:
a) zuerst das Copolyamid auf einer Temperatur von 25 °C während 5 Minuten gehalten wird,
b) dann ein modulierter Temperaturanstieg bei einer Geschwindigkeit von 3 °C/min bis auf 250 °C mit einer Sinusamplitude von 0,48 °C und einer Periode von 1 Minute vorgenommen und das Signal aufgezeichnet wird,
c) die Fläche des exothermen Peaks ΔHcf entsprechend der Kaltkristallisationsenthalpie des Copolyamids gemessen wird;
**dadurch gekennzeichnet, dass** das Copolyamid eine Mischung eines aromatischen Comonomers und eines cycloaliphatischen Copolymers umfasst.

2. Verwendung nach Anspruch 1, **dadurch gekennzeichnet, dass** das aromatische oder cycloaliphatische Comonomer des Copolyamids mindestens eine Funktion aufweist, die ausgewählt ist in der Gruppe, bestehend aus:
- einer Aminfunktion Am, die insbesondere geeignet ist, eine Amidverbindung mit einer Carbonsäurefunktion des Monomers, aus dem das Polyamid besteht, zu bilden,
- einer Carbonsäurefunktion Ac, die insbesondere geeignet ist, eine Amidverbindung mit einer Aminfunktion des Monomers, aus dem das Polyamid besteht, zu bilden;
- einer Alkoholfunktion OH, die insbesondere geeignet ist, eine Esterverbindung mit einer Carbonsäurefunktion des Monomers, aus dem das Polyamid besteht, zu bilden; und
- einer Carbondisäurefunktion DA, die insbesondere geeignet ist, eine Imidverbindung mit einer Aminfunktion des Monomers, aus dem das Polyamid besteht, zu bilden.

3. Verwendung nach Anspruch 1 oder 2, **dadurch gekennzeichnet, dass** das aromatische Comonomer in der Gruppe ausgewählt ist, bestehend aus:
Terephthalsäure, Isophthalsäure, Benzoesäure, Phenylendiamin, 1-naphthoesäure, Anthracen-9-Carbonsäure, Anilin, Naphthylamin, 1,8-Naphthalendicarbonsäure, 2,6-Naphthalendicarbonsäure, 5-Hydroxyisophthalsäure, 5-Sulfoisophthalsäure, 2,3-Diaminonaphthalen, 1,5-Diaminonaphthalen, 4-Aminobenzoesäure, 4-Hydroxybenzoesäure, 1-Hydroxy 2-Naphthoesäure, 3-Hydroxy 2-Naphthoesäure, 4,4'-Diaminodiphenylmethansäure, 4-Aminophenylether, den Trimesinsäuren, Trimellithsäure, Pyrromellithsäure, 3,4,9,10-Perylentetracarbonsäure, Amino-5 isophthalsäure, 3,5-Diaminobenzoesäure, Hydrochinon, Resorcinol, Bisphenol A, 4,4'-Oxydiphenol und Tetrahydrophthalanhydrid.

4. Verwendung nach Anspruch 1 oder 2, **dadurch gekennzeichnet, dass** das cycloaliphatische Comonomer in der Gruppe ausgewählt ist, bestehend aus:
Isophorondiamin, Bis(3,5-dialkyl-4-aminocyclohexyl)methan, Bis(3,5-dialkyl-4-aminocyclohexyl)ethan, Bis(3,5-dialkyl-4-aminocyclohexyl)propan, Bis(3,5-dialkyl-4-aminocyclohexyl)butan, Bis(3-methyl-4-aminocyclohexyl)methan, P-bis(aminocyclohexyl)methan und Isopropylidenedi(cyclohexylamin), Dicarbon-1,4 cyclohexan, 4,4'-Diamino-3,3'dimethyldicyclohexymethan, 1,4-Diaminocyclohexan, Hexahydroterephthalsäure, 4-Amino-2,2,6,6-tetramethylpiperidin (TAD), Piperazin, N-(2-aminoethyl)piperazin, N,N'-bis(2-aminoethyl)piperazin, 1,2-Diaminocyclohexan, N,N'-bis(2-aminoethyl)imidazolidon, N-(2-hydroxyethyl)piperazin, Isosorbid, Isomannid, 1,4-Cyclohexandiol, N,N'-bis(2-hydroxyethyl)imidazolidon, 4-Amino 1-Cyclohexancarbonsäure und Trans-1,2-diaminocyclohexan-N,N,N',N'-tetraessigsäure.

5. Verwendung nach einem der Ansprüche 1 bis 4, **dadurch gekennzeichnet, dass** das Pulver hergestellt wird durch
a) im geschmolzenen Zustand Mischen des Copolyamids mit einer Verbindung A, die von einem Polymermaterial gebildet ist, umfassend mindestens einen Teil seiner Struktur, der mit dem Copolyamid kompatibel ist, und mindestens einen Teil seiner Struktur, der nicht kompatibel und in dem Copolyamid unlöslich ist, um eine Dispersion von diskreten Copolyamid-Partikeln zu erhalten;
b) Kühlen der Mischung bei einer Temperatur unter der Erweichungstemperatur des Copolyamids; und
c) Behandeln der gekühlten Mischung, um die Auflösung der Copolyamid-Partikel hervorzurufen.

6. Verwendung nach Anspruch 1 oder 2, **dadurch gekennzeichnet, dass** das Pulver eine oder mehrere der folgenden Eigenschaften aufweist:
- eine granulometrische Verteilung der Partikel d50 zwischen 20 und 100 µm, vorzugsweise zwischen 30 und 70 µm, die auch dem folgenden Verhältnis entspricht: (d90-d10)/d50 zwischen 0,85-1,3, vorzugsweise 0,9-1,2;
- einen Sphärizitätsfaktor zwischen 0,8 und 1, vorzugsweise zwischen 0,85 und 1; und
- eine Intrapartikel-Porosität unter 0,05 ml/g, vorzugsweise unter 0,02 ml/g, insbesondere für Porengrößen größer oder gleich 0,01 µm.

7. Verfahren zur Herstellung eines Formartikels durch selektive Fusion von Schichten, das ein Pulver nach einem der vorhergehenden Ansprüche einsetzt.

8. Artikel, der durch selektive Fusion von Schichten geformt ist, hergestellt aus einem Pulver nach einem der vorhergehenden Ansprüche.

## Claims

1. Use of a powder comprising at least one copolyamide having an enthalpy of cold crystallization of less than 80 J/g as measured by protocol P for the manufacture of an article by selective fusion of layers;
the copolyamide comprises at least 80 mol% of caprolactam monomer or the corresponding amino acid, based on the number of moles of the total mixture of monomers and comonomers, and at least one aromatic or cycloaliphatic comonomer; and
the process P involves measuring the enthalpy of cold crystallization by modulated differential calorimetry analysis wherein:
a) the copolyamide is first held at a temperature of 25°C for 5 minutes,
b) a modulated rise in temperature is then performed to 250°C at a rate of 3°C/min with a sinusoidal amplitude of 0.48°C and a period of 1 minute, and the signal is recorded,
c) the area of the exothermic peak ΔHcc is measured, corresponding to the enthalpy of cold crystallization of the copolyamide;
**characterized in that** the copolyamide comprises a mixture of an aromatic comonomer and a cycloaliphatic comonomer.

2. Use according to Claim 1, **characterized in that** the aromatic or cycloaliphatic comonomer of the copolyamide has at least one function selected from the group consisting of:
- an amine function Am, capable in particular of forming an amide bond with a carboxylic acid function of the constituent monomer of the polyamide;
- a carboxylic acid function Ac, capable in particular of forming an amide bond with an amine function of the constituent monomer of the polyamide;
- an alcohol function OH, capable in particular of forming an ester bond with a carboxylic acid function of the constituent monomer of the polyamide; and
- a dicarboxylic acid function DA, capable in particular of forming an imide bond with an amine function of the constituent monomer of the polyamide.

3. Use according to Claim 1 or 2, **characterized in that** the aromatic comonomer is selected from the group consisting of the following: terephthalic acid, isophthalic acid, benzoic acid, phenylenediamine, 1-naphthoic acid, anthracene-9-carboxylic acid, aniline, naphthylamine, 1,8-naphthalenedicarboxylic acid, 2,6-naphthalenedicarboxylic acid, 5-hydroxyisophthalic acid, 5-sulfoisophthalic acid, 2,3-diaminonaphthalene, 1,5-diaminonaphthalene, 4-aminobenzoic acid, 4-hydroxybenzoic acid, 1-hydroxy-2-naphthoic acid, 3-hydroxy-2-naphthoic acid, 4,4'-diaminodiphenylmethane acid, 4-aminophenyl ether, trimesic acids, trimellitic acid, pyromellitic acid, 3,4,9,10-perylenetetracarboxylic acid, 5-aminoisophthalic acid, 3,5-diaminobenzoic acid, hydroquinone, resorcinol, bisphenol A, 4,4'-oxydiphenol, and tetrahydrophthalic anhydride.

4. Use according to Claim 1 or 2, **characterized in that** the cycloaliphatic comonomer is selected from the group consisting of the following:
isophoronediamine, bis(3,5-dialkyl-4-aminocyclohexyl)methane, bis(3,5-dialkyl-4-aminocyclohexyl)ethane, bis(3,5-dialkyl-4-aminocyclohexyl) propane, bis(3,5-dialkyl-4-aminocyclohexyl) butane, bis(3-methyl-4-aminocyclohexyl)methane, p-bis(aminocyclohexyl)methane, and isopropylidenedi(cyclohexylamine), 1,4-dicarboxycyclohexane, 4,4'-diamino-3,3'-dimethyldicyclohexylmethane, 1,4-diaminocyclohexane, hexahydroterephthalic acid, 4-amino-2,2,6,6-tetramethylpiperidine (TAD), piperazine, N-(2-aminoethyl)piperazine, N,N'-bis(2-aminoethyl)piperazine, 1,2-diaminocyclohexane, N,N'-bis(2-aminoethyl)imidazolidone, N-(2-hydroxyethyl)piperazine, isosorbide, isomannide, 1,4-cyclohexanediol, N,N'-bis(2-hydroxyethyl)imidazolidone, 4-amino-1-cyclohexanecarboxylic acid, and trans-1,2-diaminocyclohexane-N,N,N',N'-tetraacetic acid.

5. Use according to any of Claims 1 to 4, **characterized in that** the powder is produced by
a) melt-mixing the copolyamide with a compound A consisting of a polymeric material comprising at least one part of its structure that is compatible with said copolyamide and at least one part of its structure that is not compatible and is insoluble in said copolyamide, to give a dispersion of discrete particles of copolyamide;
b) cooling this mixture to a temperature lower than the softening temperature of the copolyamide; and
c) treating this cooled mixture to bring about the disintegration of the copolyamide particles.

6. Use according to Claim 1 or 2, **characterized in that** the powder has one or more of the following features:
- a d50 particle size distribution of between 20 and 100 µm, preferably between 30 and 70 µm, and also fulfilling the following relation: (d90-d10)/d50 of between 0.85-1.3, preferably 0.9-1.2;
- a sphericity factor of between 0.8 and 1, preferably between 0.85 and 1; and
- an intraparticular porosity of less than 0.05 ml/g, preferably less than 0.02 ml/g, especially for pore sizes of greater than or equal to 0.01 µm.

7. Method for manufacturing an article by selective fusion of layers, employing a powder according to any of the preceding claims.

8. Article manufactured by selective fusion of layers, obtained from a powder according to any of the preceding claims.
